(19) Europäisches Patentamt
European Patent Office
Office européen des brevets

(11) **EP 2 504 715 B1**

(12) **FASCICULE DE BREVET EUROPEEN**

(45) Date de publication et mention
de la délivrance du brevet:
**04.06.2014 Bulletin 2014/23**

(21) Numéro de dépôt: **10782600.0**

(22) Date de dépôt: **24.11.2010**

(51) Int Cl.:
*G01S 3/50* *(2006.01)*    *G01S 3/72* *(2006.01)*
*G01S 3/04* *(2006.01)*

(86) Numéro de dépôt international:
**PCT/EP2010/068151**

(87) Numéro de publication internationale:
**WO 2011/064269 (03.06.2011 Gazette 2011/22)**

(54) **SYSTEME DE RECEPTION MULTIVOIES**

MEHRKANALIGES EMPFANGSSYSTEM

MULTI-CHANNEL RECEPTION SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.11.2009 FR 0905641**

(43) Date de publication de la demande:
**03.10.2012 Bulletin 2012/40**

(73) Titulaire: **Thales**
**92200 Neuilly Sur Seine (FR)**

(72) Inventeurs:
• **JAHAN, Daniel**
**F-29820 Bohars (FR)**

• **CORNU, Cédric**
**F-29200 Brest (FR)**

(74) Mandataire: **Lucas, Laurent Jacques et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**EP-A1- 0 298 845     WO-A1-2006/110260**
**DE-A1- 10 163 455     DE-A1-102008 004 474**

**Description**

L'invention porte sur des systèmes de réception multivoies, c'est-à-dire aptes à capter les ondes incidentes à l'aide d'un réseau d'antennes. Il y a alors autant de signaux d'intérêt, c'est-à-dire porteurs d'informations recherchées, que d'antennes, si l'on souhaite acquérir instantanément la totalité des informations.

L'invention est particulièrement adaptée aux systèmes de réception multivoies dits à large bande instantanée ou à bande instantanée restreinte.

Lorsque le système de réception est à large bande instantanée, cela signifie que les N voies de réception correspondant aux N antennes du réseau peuvent couvrir instantanément la totalité de la couverture requise en fréquence (par exemple de l'ordre de 10 à 20 GHz).

Lorsque le système de réception est à bande instantanée restreinte (par exemple de l'ordre de plusieurs centaines de MHz), cela signifie que les N voies de réception correspondant aux N antennes du réseau doivent effectuer un balayage en fréquence dans le temps de façon à parcourir entièrement la totalité de la couverture requise en fréquence.

Ces systèmes de réception multivoies à bande instantanée restreinte ou non, sont particulièrement adaptés pour effectuer une goniométrie. Ces derniers sont capables de mesurer la direction d'arrivée d'une onde incidente donnée. Une particularité de l'onde incidente peut être la brièveté, par exemple des signaux modulés en amplitude par impulsion avec un facteur de forme relativement faible (comme celles émises par les radars). Il convient alors de pouvoir effectuer la goniométrie en un temps très court, et de ce fait, de mesurer l'ensemble des signaux délivrés par le réseau d'antennes goniométrique très rapidement et en parallèle.

Pour ce faire, les systèmes de réception multivoies précités comprennent avantageusement un récepteur réalisé à partir de réseaux d'antennes :

- soit dépointées (réseau d'antennes directives généralement équidistribuées en angle dans le plan de mesure de la direction d'arrivée des ondes incidentes), ledit récepteur est alors couplé à un moyen de mesure apte à utiliser la puissance des signaux délivrés par le réseau d'antennes,
- soit délocalisées (réseau d'antennes généralement localement linéaire et lacunaire dans le plan de mesure de la direction d'arrivée) et ledit récepteur est alors couplé à un moyen de mesure apte à utiliser la distribution de différences de marche issue du réseau d'antennes.

Bien entendu, ces exemples ne sont pas limitatifs.

Un système de réception multivoies (ici N voies) à large bande instantanée, peut donc acquérir N signaux issus des N antennes du réseau.

Pour ce faire, il est muni d'autant d'analyseurs d'amplitude que de voies, de façon à mesurer la puissance de l'onde incidente sur chaque voie. La distribution de ces puissances sur les N voies permet de calculer un paramètre de direction d'arrivée, calculé grâce à un estimateur dit de goniométrie d'amplitude.

En outre, l'analyse technique du signal requiert la mesure de sa fréquence, celle-ci étant la même sur chaque voie et pour des raisons de simplification, un seul fréquencemètre est généralement utilisé. Dans ces conditions, on emploie un moyen de combinaison qui a pour rôle de ne délivrer qu'un seul signal à partir des N, à l'unique fréquencemètre.

Cette fonction combineur prend aujourd'hui différentes formes peu satisfaisantes. Il peut s'agir d'un simple coupleur hyperfréquence à N voies d'entrée. Celui-ci a pour défaut de faire l'addition vectorielle de N voies avec des phases non maîtrisables. La conséquence est que le signal en sortie dudit combineur peut s'annuler par opposition de phase des signaux d'entrée. En variante, il peut s'agir de systèmes mixant le couplage de certaines voies et le multiplexage des sorties couplées par commutation. Cette solution a le défaut de toucher à l'intégrité du signal.

On note que les systèmes de réception multivoies précités peuvent en outre posséder des moyens aptes à effectuer une résolution fréquentielle des signaux reçus par les antennes. On parle alors de système de réception à analyse spectrale de bande instantanée restreinte, cette restriction étant faite par des chaînes de réception de type superhétérodyne.

Un désavantage des systèmes de réception multivoies à large bande instantanée (sans résolution fréquentielle) décrits ci-avant est la quantité de matériel nécessaire (un analyseur d'amplitude par voie) et donc l'encombrement, le coût du système dans une certaine mesure. Par ailleurs, la fonction combineur précitée induit de nombreux désagréments techniques.

Un autre désavantage majeur des systèmes de réception multivoies à analyse spectrale de l'art antérieur est la quantité de matériel (un analyseur spectral par voie) et donc l'encombrement et le coût du système.

Un but de l'invention est notamment de résoudre les problèmes précités.

A cet effet, selon un premier aspect de l'invention, il est proposé un système de réception comprenant un récepteur couplé à un moyen de traitement, le récepteur comprenant un nombre N d'antennes, chacune étant apte à capter des signaux représentatifs d'ondes incidentes et à délivrer une impulsion fonction dudit signal, N étant un entier, N≥2.

Selon une caractéristique générale de ce premier aspect, ledit récepteur comprend :

- N lignes-à-retard respectivement couplées à chacune desdites N antennes, chaque ligne-à-retard étant apte à retarder le signal délivré par l'antenne à laquelle elle est associée d'un retard temporel qui lui est propre,

- un moyen de couplage apte à sommer les N signaux délivrés par les N lignes-à-retard, de façon à délivrer un signal de sortie comprenant une série de N impulsions temporellement décalées.

En outre, le moyen de traitement comprend un moyen de mesure apte à mesurer le signal délivré par le moyen de couplage et à délivrer en sortie un signal formé par des échantillons de mesure, représentatifs des N impulsions délivrées par les N antennes.

Autrement dit, grâce un multiplexage temporel, un unique signal est formé. Ce signal est formé des impulsions reçues séquencées en série dans le temps.

Ce signal a pour avantage de permettre la suppression du combineur utilisé dans les solutions de l'art antérieur. La structure du système de réception est ainsi grandement simplifiée et donc moins coûteuse lors de sa réalisation.

Par ailleurs, le système de réception proposé a pour avantage d'être est très fiable quant à la conservation de l'intégrité du signal traité.

Selon un mode de réalisation, ledit moyen de traitement peut comprendre en outre :

- un moyen de caractérisation technique des impulsions, couplé en sortie du moyen de mesure, apte à analyser techniquement chaque impulsion à partir des échantillons de mesure,
- un moyen auxiliaire apte à regrouper les signaux d'analyse technique délivrés par le moyen de caractérisation technique correspondant à une même onde incidente.

De préférence, le moyen de traitement peut comprendre en outre un moyen de caractérisation technique consolidée et goniométrique des impulsions, aptes à partir des analyses techniques regroupées, délivrées par ledit moyen auxiliaire, d'une part :

- à déterminer la direction d'arrivée de chaque onde incidente par les antennes, et d'autre part
- à réaliser une autre analyse technique de chaque onde incidente.

De préférence, chaque retard $\tau_i$ de chaque ligne-à-retard, i variant entre 1 et N peut être défini tel que :

$$\tau_{i+1} \geq \tau_i + Max(LI + \tau_{prop}),$$

où :

- LI est la largeur de l'impulsion considérée, retardée par la ligne-à-retard de rang i, et
- $\tau_{prop}$ est le retard de propagation maximal entre deux antennes.

En variante, ledit récepteur peut être de type superhétérodyne et comprendre en outre :

- N oscillateurs locaux respectivement associés à chacune des antennes, chaque oscillateur local étant apte à générer un signal d'onde locale ayant une fréquence qui lui est propre, et
- N mélangeurs respectivement couplés entre la sortie de chaque antenne et l'entrée de la ligne-à-retard correspondante, et aptes à recevoir l'onde locale de l'oscillateur local associé à l'antenne considérée, chaque mélangeur étant apte à décaler en fréquence d'un décalage $\Delta f_i$, l'impulsion délivrée par l'antenne considérée, de la valeur de la fréquence de l'onde locale délivrée par l'oscillateur local considéré.

De préférence, ledit moyen de mesure peut alors être apte à séparer fréquentiellement chaque impulsion comprise au sein du signal de sortie du moyen de couplage.

De préférence, chaque décalage en fréquence peut alors être défini tel que :

$$\Delta f_{i+1} \geq \Delta f_i + \Delta f_{spectre},$$

où

- $\Delta f_i$ est le décalage en fréquence réalisé sur le signal de sortie du mélangeur de rang i, et
- $\Delta f_{spectre}$ est la largeur du spectre des signaux mis en oeuvre par ledit système.

Par exemple, le système peut être de type à large bande instantanée.

En variante, le système peut être de type à bande instantanée restreinte.

Selon un autre aspect de l'invention, il est proposé une utilisation d'un système tel que mentionné ci-avant pour effectuer une goniométrie.

D'autres avantages et caractéristiques de l'invention apparaîtront à l'examen de la description détaillée de modes de réalisation de l'invention, nullement limitatifs, et des dessins annexés sur lesquels :

- la figure 1 illustre un premier mode de réalisation de l'invention,
- la figure 2 représente des signaux mis en oeuvre par le mode de réalisation de la figure 1,
- la figure 3 illustre un deuxième mode de réalisation de l'invention, et
- la figure 4 représente des signaux mis en oeuvre par le mode de réalisation de la figure 3.

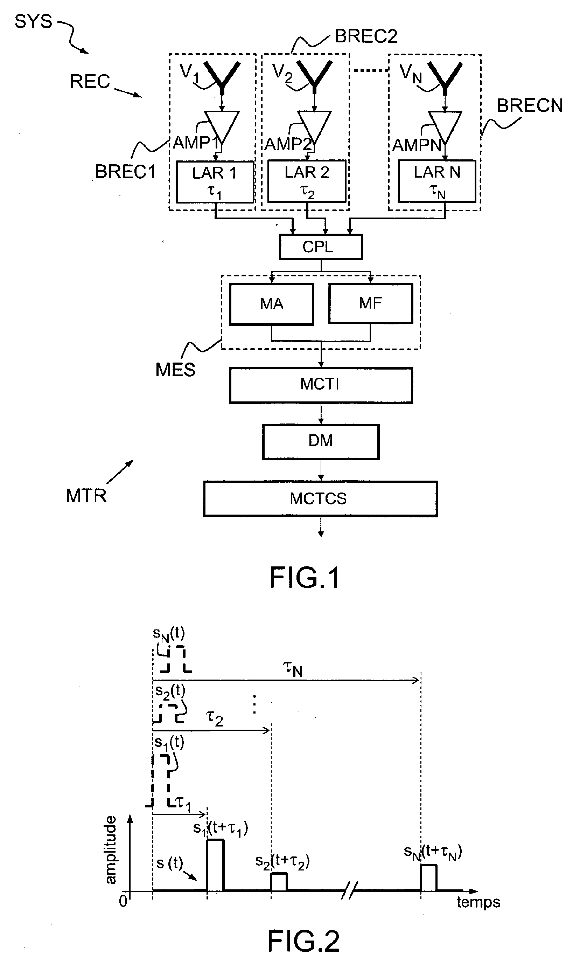

On se réfère à la figure 1. La référence SYS désigne un système de réception multivoies selon un premier mode de réalisation de l'invention. Le système SYS

3

est ici à large bande instantanée d'un seul tenant de façon à simplifier l'architecture du système.

Le système SYS comprend un récepteur REC couplé à un moyen de traitement MTR.

Le récepteur REC comprend N blocs de réception BREC1, ..., BRECN, N étant un entier. Chaque bloc de réception BREC1, ..., BRECN comprend une antenne respectivement référencée $V_1$, ..., $V_N$. Les antennes $V_1$, ..., $V_N$ sont dans cet exemple équidistantes. Chaque antenne $V_1$, ..., $V_N$ est apte à capter un signal représentatif d'ondes incidentes.

On considère dans cet exemple que chaque signal capté par une antenne est une brève impulsion.

La sortie de chaque antenne est reliée à un amplificateur, respectivement référencé AMP1,..., AMPN.

Chaque amplificateur AMP1,..., AMPN est apte à amplifier l'impulsion délivrée par l'antenne auquel il est couplé. L'impulsion amplifiée par un amplificateur AMPi, i variant entre 1 et N, est référencée $s_i(t)$ sur la figure 2. Chaque impulsion a un temps d'arrivée et une amplitude qui lui est propre, du fait que les antennes $V_1$, ..., $V_N$ ont des placements et des orientations différentes dans l'espace.

On se réfère à nouveau à la figure 1. La sortie de chaque amplificateur AMP1,..., AMPN est respectivement couplée à une ligne-à-retard LAR1, ..., LARN. Cette ligne-à-retard a pour rôle de retarder l'impulsion amplifiée d'un retard choisi, $\tau_i$. Ce retard est défini plus en détail ci-après.

Les sorties de l'ensemble des lignes-à-retard sont couplées au moyen de traitement MTR et plus particulièrement reliées à un coupleur CPL incorporé au sein du moyen de traitement MTR. Ce dernier a pour fonction de sommer les impulsions retardées de façon à former et délivrer un seul et unique signal. En d'autres termes, les lignes-à-retard LAR1, ..., LARN et le coupleur CPL permettent de réaliser un multiplexage dans le temps selon les retards $\tau_i$. Ce signal $s(t)$ est représenté sur la figure 2. Il est formé de N impulsions séquencées en série dans le temps.

Pour que les impulsions ne se recouvrent pas au moment du couplage, le retard $\tau_i$ inséré par chaque ligne-à-retard doit respecter de préférence la condition ci-dessous :

$$\tau_{i+1} \geq \tau_i + Max(LI + \tau_{prop}),$$

où :

- LI est la largeur de l'impulsion considérée, retardée par la ligne-à-retard de rang i, et
- $\tau_{prop}$ est le retard de propagation maximal entre deux antennes.

Le temps de propagation $\tau_{prop}$ est lié au décalage dans l'espace d'une antenne par rapport à l'autre au sein du système.

De cette façon, l'intégrité temporelle de chaque impulsion est préservée.

On se réfère à nouveau à la figure 1.

A titre d'exemple, les lignes-à-retard LAR1, ..., LARN et le coupleur CPL peuvent être réalisés à l'aide de dispositifs de transformation hyper-optiques bien connu de l'homme du métier. L'avantage de ce type de dispositif pour les lignes-à-retard LAR1, ..., LARN est de pouvoir facilement mettre en oeuvre des retards élevés. En outre ils engendrent peu de pertes dans les signaux traités et sont peu encombrants.

Le signal formé par le coupleur CPL est délivré à un moyen de mesure MES. Celui-ci est unique pour l'ensemble des N impulsions retardées délivrées par les lignes-à-retard LAR1, ..., LARN.

Un rôle du moyen de mesure MES est de délivrer en sortie des échantillons de mesures en série portant sur le signal d'entrée.

Pour ce faire, le moyen de mesure MES comprend deux modules :

- un moyen d'analyse de l'amplitude MA, et
- un moyen d'analyse de la fréquence MF.

Le moyen d'analyse de l'amplitude MA a pour fonction de mesurer la puissance de chaque impulsion du signal d'entrée. Cela peut être réalisé au moyen d'un détecteur quadratique (il peut être fait très simplement à l'aide d'une diode). Le détecteur quadratique délivre une tension proportionnelle à la puissance du signal d'entrée.

Le moyen d'analyse de la fréquence MF a pour fonction de déterminer la fréquence d'émission des impulsions.

La sortie du moyen de mesure MES est couplée à l'entrée d'un moyen de caractérisation technique des impulsions MCTI.

Ce dernier est apte à analyser techniquement chaque impulsion à partir des échantillons de mesure amplitude et fréquence) délivrés périodiquement par le moyen de mesure MES. Il délivre en sortie.

Classiquement, sont délivrés des paramètres dits primaires de chaque impulsion à l'exception de la direction d'arrivée, puisque celle-ci nécessite avant tout de récupérer le jeu d'impulsions provenant de la même onde incidente. Parmi ces paramètres primaires se trouvent donc par exemple, la puissance de l'impulsion, la fréquence de la porteuse de l'impulsion, la date d'arrivée de l'impulsion, la largeur de l'impulsion, et sous réserve d'une caractérisation intra-impulsion, l'étalement spectral de l'impulsion, son profil d'évolution en fréquence, son profil d'évolution en amplitude. Bien entendu, cette liste est non exhaustive.

Un moyen auxiliaire DM est couplé en sortie du moyen de caractérisation technique des impulsions MCTI. Ce moyen auxiliaire DM est apte à réaliser d'une part un démultiplexage et d'autre part une corrélation du signal qu'il reçoit en entrée.

Le démultiplexage des données permet de grouper les analyses techniques des impulsions appartenant à une même onde captée en parallèle par plusieurs antennes et issues du multiplexage dans le temps à l'aide des retards $\tau_i$. Selon le type de réseau d'antennes et la puissance captée par chaque antenne, en particulier dans le cas d'un réseau circulaire (antennes pointées dans des directions différentes), à l'issue du regroupement opéré par le moyen auxiliaire ne donnera pas nécessairement N analyses techniques d'impulsions.

Le regroupement des analyses techniques d'impulsion par le moyen auxiliaire DM se fait :

- sur une fenêtre de temps qui n'excède pas le plus grand des écarts de retard, soit Max($\tau_i$ - $\tau_j$), ($i \neq j$, et($i$, $j$) $\in$ [1,..., $N$]),
- par ressemblance des paramètres techniques stables, c'est-à-dire ceux qui ne dépendent pas du réseau antennaire et de la direction d'arrivée de l'onde sur celui-ci.

Par exemple, pour un réseau d'antennes circulaire, le regroupement est basé sur la fréquence de l'émission, sa largeur d'impulsion, et son éventuelle caractérisation intra-impulsion. Ces derniers sont facilement obtenus par des traitements connus de l'homme du métier utilisant notamment des tolérances pour tenir compte des erreurs de mesure commises.

Plus précisément, le démultiplexage réalisé par le moyen auxiliaire DM (c'est-à-dire l'association des N impulsions issues des N antennes et correspondant à la même onde interceptée) se fait par corrélation.

Celle-ci ne peut se faire que sur des caractéristiques invariantes dans chacune des N impulsions et sur la reconnaissance de la loi de retard entre-elles. Les caractéristiques invariantes sur les N impulsions sont celles qui sont propres à l'onde, indépendamment de toute considération géométrique liée au réseau d'antennes et à son illumination par l'onde incidente. C'est ainsi que la puissance, la date d'arrivée et la phase des impulsions ne sont pas des invariants, mais sont des caractéristiques porteuses, respectivement d'illuminations relatives différentes dues aux diagrammes de rayonnement et aux différences de marche.

Le principe général du démultiplexage se fait par le regroupement (ou tri) des impulsions, basé sur la similitude de leurs paramètres primaires (les invariants) et la similitude de la distribution relative des dates d'arrivée par rapport à la distribution des retards induits volontairement par les lignes-à-retard LARi.

Ces retards induits par les lignes-à-retard LARi, étant parfaitement définis et connus, ils permettent d'effectuer ce regroupement uniquement en analysant les impulsions appartenant à une fenêtre de temps glissante, limitée au retard maximal entre voies.

Pour ce faire, on réalise des opérations mathématiques de comparaison de valeurs de grandeurs de même nature. Comme ces valeurs sont issues à la fois de mesures et de définitions matérielles, il convient de réaliser les comparaisons en tenant compte de tolérances liées, respectivement, aux erreurs de mesures et aux définitions matérielles. Ces opérations sont classiques dans les fonctions de fusion, classification, pistage, etc...

On note que pour le cas du décalage en fréquence, la fréquence n'est plus un invariant, et que le regroupement en fréquence ne peut se faire que par reconnaissance de la loi de décalage en fréquence. Il y a alors une fenêtre glissante en fréquence.

Par ailleurs, si l'on utilise conjointement, le décalage en temps et le décalage en fréquence, alors la fenêtre glissante de corrélation est à la fois sur le temps et sur la fréquence.

Finalement, un moyen de caractérisation technique consolidée et goniométrique des impulsions MCTCS est couplé en sortie du moyen auxiliaire DM. Ce dernier a pour fonction d'estimer à partir des analyses techniques (au maximum N) délivrées par le moyen auxiliaire DM :

- d'une part la direction d'arrivée (goniométrique) des ondes incidentes, et
- d'autre part de nouveaux paramètres techniques plus précis (car issus de plusieurs mesures) caractérisant les ondes incidentes reçues par les antennes $V_1$, ..., $V_N$.

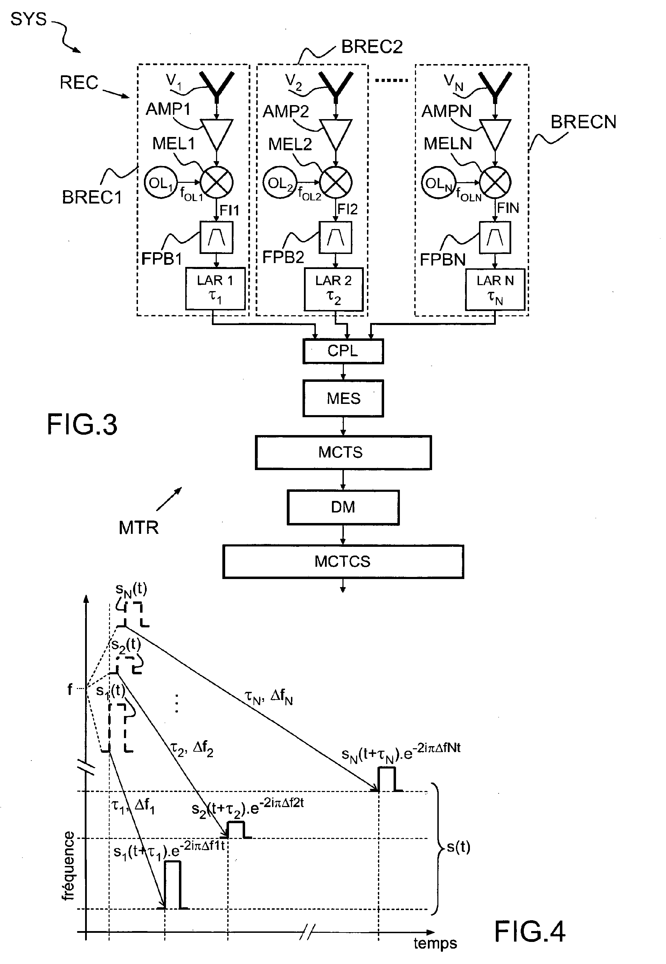

On se réfère à présent à la figure 3 où la référence SYS désigne un autre mode de réalisation de l'invention.

Les modules ayant les mêmes références que sur la figure 1 ont, sauf indication contraire, la même fonction que ces derniers.

Le récepteur REC considéré est de type superhétérodyne, c'est-à-dire permettant de restreindre la bande de fréquence à une valeur acceptable par un analyseur spectral, lequel sera apte à séparer les signaux en fréquence, comme expliqué plus en détail ci-après. Ce type de récepteur a pour avantage d'être particulièrement stable en fréquence.

Outre les lignes-à-retard LAR1, ..., LARN permettant de multiplexer temporellement les impulsions reçues, chaque bloc de réception REC1, .., RECN de ce nouveau mode de réalisation comprend un ensemble d'oscillateurs locaux $OL_1$,..., $OL_N$.

Chaque oscillateur local $OL_1$,..., $OL_N$ est respectivement couplé à l'entrée d'un mélangeur MEL1, ..., MELN, l'autre entrée de celui-ci recevant la sortie d'un amplificateur AMP1, ..., AMPN.

Plus précisément, chaque oscillateur local $OL_1$,..., $OL_N$ délivre un signal à une fréquence donnée $f_{OL1}$,..., $f_{OLN}$ de façon à multiplexer en fréquence l'impulsion amplifiée délivré par l'amplificateur correspondant AMP1, ..., AMPN.

En sortie du mélangeur MEL1, ..., MELN, chaque impulsion est décalée en fréquence et de fréquence intermédiaire FI1, ..., FIN, est filtrée par un filtre passe-bande FPB1, ..., FPBN, identiques sur les N voies de façon à

- d'une part restreindre la bande amenée vers la suite du système, et
- d'autre part, ne garder que le produit souhaité à l'issue du mélangeur.

Ainsi, en sortie du coupleur CPL, comme représenté sur la figure 4, le signal s(t) délivré est formé d'impulsions $s_i(t+\tau_i).e^{-2i\pi\Delta f_i t}$, décalées en temps et en fréquence (i étant compris entre 1 et N). On note que $\Delta f_i$ représente l'écart de fréquence entre la valeur initiale de la fréquence de l'impulsion de rang i, $s_i(t)$, et la valeur de la fréquence finale après un multiplexage à l'aide de l'oscillateur local $OL_i$.

On signale qu'il est préférable que le critère de fonctionnement suivant soit respecté, pour préserver l'intégrité spectrale des signaux considérés :

$$\Delta f_{i+1} \geq \Delta f_i + \Delta f_{spectre},$$

où

- $\Delta f_i$ est le décalage en fréquence réalisé sur le signal de sortie du mélangeur de rang i, et
- $\Delta f_{spectre}$ est la largeur du spectre des signaux reçus par le système SYS.

On se réfère à nouveau à la figure 3. Le moyen de mesure MES est ici formé d'un analyseur spectral. Classiquement, un analyseur spectral est formé d'un banc de filtres apte à séparer chaque impulsion selon la bande de fréquence à laquelle elle appartient.

Par ailleurs, le moyen auxiliaire DM travaille de préférence sur une fenêtre temps-fréquence définie selon les plus grands des écarts de retards et des écarts de décalages de fréquence, soit :

$$\left[Max(\tau_i - \tau_k), Max(\Delta f_i - \Delta f_k)\right].$$

Les oscillateurs locaux $OL_1$, ..., $OL_N$ peuvent être formés par ceux classiquement incorporés au sein des récepteurs de type superhétérodyne.

On note qu'en variante, il est possible d'associer un seuil de détection à chaque antenne, de façon à ne considérer que les signaux reçus dont la puissance dépasse le seuil de détection.

**Revendications**

**1.** Système de réception (SYS) comprenant un récepteur (REC) couplé à un moyen de traitement (MTR), le récepteur comprenant un nombre N d'antennes ($V_1$, ..., $V_N$), chacune étant apte à capter des signaux représentatifs d'ondes incidentes et à délivrer une impulsion fonction dudit signal, N étant un entier, N≥2, **caractérisé par le fait que** ledit récepteur (REC) comprend :

- N lignes-à-retard (LAR1, ..., LARN) respectivement couplées à chacune desdites N antennes, chaque ligne-à-retard étant apte à retarder le signal délivré par l'antenne à laquelle elle est associée, d'un retard temporel qui lui est propre,
- un moyen de couplage (CPL) apte à sommer les N signaux délivrés par les N lignes-à-retard, de façon à délivrer un signal de sortie comprenant une série de N impulsions temporellement décalées,

et **par le fait que** le moyen de traitement (MTR) comprend un moyen de mesure (MES) apte à mesurer le signal délivré par le moyen de couplage (CPL) et à délivrer en sortie un signal formé par des échantillons de mesure, représentatifs des N impulsions délivrées par les N antennes (LAR1, ..., LARN).

**2.** Système selon la revendication précédente, dans lequel ledit moyen de traitement comprend en outre :

- un moyen de caractérisation technique (MCTI) des impulsions, couplé en sortie du moyen de mesure, apte à analyser techniquement chaque impulsion à partir des échantillons de mesure,
- un moyen auxiliaire (DM) apte à regrouper les signaux d'analyse technique délivrés par le moyen de caractérisation technique correspondant à une même onde incidente.

**3.** Système selon la revendication précédente, dans lequel le moyen de traitement (MTR) comprend en outre un moyen de caractérisation technique consolidée et goniométrique (MCTCS) des impulsions, aptes à partir des analyses techniques regroupées, délivrées par ledit moyen auxiliaire (DM), d'une part :

- à déterminer la direction d'arrivée de chaque onde incidente par les antennes, et d'autre part
- à réaliser une autre analyse technique de chaque onde incidente.

**4.** Système selon l'une des revendications précédentes, dans lequel chaque retard $\tau_i$ de chaque ligne-à-retard, i variant entre 1 et N est défini tel que :

$$\tau_{i+1} \geq \tau_i + Max(LI + \tau_{prop}),$$

où :

- LI est la largeur de l'impulsion considérée, retardée par la ligne-à-retard de rang i, et
- $\tau_{prop}$ est le retard de propagation maximal entre deux antennes.

5. Système selon l'une des revendications précédentes, dans lequel ledit récepteur est de type superhétérodyne et comprend en outre :

  - N oscillateurs locaux ($OL_1$, ..., $OL_N$) respectivement associés à chacune des antennes, chaque oscillateur local étant apte à générer un signal d'onde locale ayant une fréquence qui lui est propre, et
  - N mélangeurs (MEL1, ..., MELN) respectivement couplés entre la sortie de chaque antenne et l'entrée de la ligne-à-retard correspondante, et aptes à recevoir l'onde locale de l'oscillateur local associé à l'antenne considérée, chaque mélangeur étant apte à décaler en fréquence d'un décalage $\Delta f_i$, l'impulsion délivrée par l'antenne considérée, de la valeur de la fréquence de l'onde locale délivrée par l'oscillateur local considéré.

6. Système selon la revendication précédente, dans lequel ledit moyen de mesure (MES) est apte à séparer fréquentiellement chaque impulsion comprise au sein du signal de sortie du moyen de couplage.

7. Système selon l'une des revendications 5 ou 6, dans lequel chaque décalage en fréquence est défini tel que :

$$\Delta f_{i+1} \geq \Delta f_i + \Delta f_{spectre},$$

où

  - $\Delta f_i$ est le décalage en fréquence réalisé sur le signal de sortie du mélangeur de rang i, et
  - $\Delta f_{spectre}$ est la largeur du spectre des signaux mis en oeuvre par ledit système.

8. Système selon l'une des revendications précédentes, étant de type à large bande instantanée.

9. Système selon l'une des revendications 1 à 7, étant de type à bande instantanée restreinte.

10. Utilisation d'un système selon l'une des revendications précédentes pour effectuer une goniométrie.


**Patentansprüche**

1. Empfangssystem (SYS) mit einem Empfänger (REC), der mit einem Verarbeitungsmittel (MTR) gekoppelt ist, wobei der Empfänger eine Anzahl N von Antennen ($V_1$, ..., $V_N$) umfasst, die jeweils für einfallende Wellen repräsentative Signale erfassen und einen Impuls in Abhängigkeit von dem Signal ausgeben können, wobei N eine ganze Zahl n $\geq$ 2 ist, **dadurch gekennzeichnet, dass** der Empfänger (REC) Folgendes umfasst:

  - N Verzögerungsleitungen (LAR1, ..., LARN), die jeweils mit jeder der N Antennen gekoppelt sind, wobei jede Verzögerungsleitung das von der mit ihr assoziierten Antenne zugeführte Signal um eine ihr eigene Zeit verzögern kann,
  - ein Kopplungsmittel (CPL) zum Summieren der von den N Verzögerungsleitungen zugeführten N Signale, um ein Ausgangssignal zu liefern, das eine Serie von N zeitlich versetzten Impulsen umfasst,
  und dadurch, dass das Verarbeitungsmittel (MTR) ein Messmittel (MES) zum Messen des von dem Kopplungsmittel (CPL) gelieferten Signals und zum Ausgeben eines von Messproben gebildeten Signals umfasst, die für von den N Antennen (LAR1, ..., LARN) gelieferten N Impulsen repräsentativ sind.

2. System nach dem vorherigen Anspruch, wobei das Verarbeitungsmittel ferner Folgendes umfasst:

  - ein Mittel (MCTI) zum technischen Charakterisieren von Impulsen, das am Ausgang des Messmittels gekoppelt ist, um jeden Impuls auf der Basis von Messproben technisch zu analysieren,
  - ein Zusatzmittel (DM) zum Gruppieren der von dem technischen Charakterisierungsmittel gelieferten technischen Analysesignale, die derselben einfallenden Welle entsprechen.

3. System nach dem vorherigen Anspruch, bei dem das Verarbeitungsmittel (MTR) ferner ein Mittel zur konsolidierten und goniometrischen technischen Charakterisierung (MCTCS) von Impulsen umfasst, um auf der Basis von gruppierten technischen Analysen, die von dem Zusatzmittel (DM) geliefert wurden, einerseits:

  - die Ankunftsrichtung jeder einfallenden Welle durch die Antennen zu bestimmen, und andererseits
  - eine andere technische Analyse jeder einfallenden Welle zu realisieren.

4. System nach einem der vorherigen Ansprüche, bei dem jede Verzögerung $\tau_i$ jeder Verzögerungsleitung, wobei i zwischen 1 und N variiert, wie folgt definiert ist:

$$\tau_{i+1} \geq \tau_i + Max(LI + \tau_{prop}),$$

wobei:

- LI die Breite des betrachteten Impulses ist, verzögert durch die Verzögerungsleitung von Rang i, und
- $\tau_{prop}$ die maximale Ausbreitungsverzögerung zwischen zwei Antennen ist.

**5.** System nach einem der vorherigen Ansprüche, bei dem der Empfänger vom Superheterodyn-Typ ist und ferner Folgendes umfasst:

- N Lokaloszillatoren ($OL_1$, ..., $OL_N$), die jeweils mit jeder der Antennen assoziiert sind, wobei jeder Lokaloszillator ein lokales Wellensignal mit einer ihm eigenen Frequenz erzeugen kann, und
- N Mischer (MEL1, ..., MELN), die jeweils zwischen dem Ausgang jeder Antenne und dem Eingang der entsprechenden Verzögerungsleitung gekoppelt sind und die die lokale Welle des lokalen Oszillators in Verbindung mit der betrachteten Antenne empfangen können, wobei jeder Mischer den von der betrachteten Antenne zugeführten Impuls um einen Versatz $\Delta f_i$ vom Wert der Frequenz der lokalen Welle frequenzverschieben kann, die von dem betrachteten lokalen Oszillator geliefert wird.

**6.** System nach dem vorherigen Anspruch, bei dem das Messmittel (MIS) jeden im Ausgangssignal des Kopplungsmittels enthaltenen Impuls frequenzmäßig trennen kann.

**7.** System nach Anspruch 5 oder 6, bei dem jeder Frequenzversatz wie folgt definiert ist:

$$\Delta f_{i+1} \geq \Delta f_i + \Delta f_{spectre},$$

wobei:

- $\Delta f_i$ der am Ausgangssignal des Mischers von Rang i realisierte Frequenzversatz ist, und
- $\Delta f_{spectre}$ die Breite des Spektrums von durch das System realisierten Signalen ist.

**8.** System nach einem der vorherigen Ansprüche, das vom Typ mit momentanem Breitband ist.

**9.** System nach einem der Ansprüche 1 bis 7, das vom Typ mit eingeschränktem momentanem Band ist.

**10.** Verwendung eines Systems nach einem der vorherigen Ansprüche zum Ausführen einer Goniometrie.

**Claims**

**1.** A reception system (SYS) comprising a receiver (REC) coupled to a processing means (MTR), the receiver comprising a number N of antennas ($V_1$, ..., $V_N$), each being able to pick up signals representative of incident waves and to deliver a pulse as a function of said signal, N being an integer, N$\geq$2, **characterized by** the fact that said receiver (REC) comprises:

- N delay lines (LAR1, ..., LARN) respectively coupled to each of said N antennas, each delay line being able to delay the signal delivered by the antenna with which it is associated, by its own time delay,
- a coupling means (CPL) able to sum the N signals delivered by the N delay lines, so as to deliver an output signal comprising a series of N time-shifted pulses, and by the fact that the processing means (MTR) comprises a measurement means (MES) able to measure the signal delivered by the coupling means (CPL) and to deliver as output a signal formed by measurement samples, representative of the N pulses delivered by the N antennas (LAR1, ..., LARN).

**2.** The system as claimed in the preceding claim, in which said processing means furthermore comprises:

- a means for technical characterization (MCTI) of the pulses, coupled at the output of the measurement means, able to technically analyze each pulse on the basis of the measurement samples,
- an auxiliary means (DM) able to group together the technical analysis signals delivered by the means for technical characterization corresponding to one and the same incident wave.

**3.** The system as claimed in the preceding claim, in which the processing means (MTR) furthermore comprises a means for consolidated and goniometric technical characterization (MCTCS) of the pulses, able on the basis of the grouped technical analyses, delivered by said auxiliary means (DM), on the one hand:

- to determine the direction of arrival of each incident wave by the antennas, and on the other hand
- to carry out another technical analysis of each incident wave.

4. The system according to any of the preceding claims, in which each delay $\tau_i$ of each delay line, i varying between 1 and N is defined such that:

$$\tau_{i+1} \geq \tau_i + Max(LI + \tau_{prop}),$$

where:

- LI is the width of the pulse considered, delayed by the delay line of rank i, and
- $\tau_{prop}$ is the maximum propagation delay between two antennas.

5. The system according to any of the preceding claims, in which said receiver is of superheterodyne type and furthermore comprises:

- N local oscillators ($OL_1$, ..., $OL_N$) respectively associated with each of the antennas, each local oscillator being able to generate a local-wave signal having its own frequency, and
- N mixers (MEL1, ..., MELN) respectively coupled between the output of each antenna and the input of the corresponding delay line, and able to receive the local wave of the local oscillator associated with the antenna considered, each mixer being able to frequency shift by a shift $\Delta f_i$, the pulse delivered by the antenna considered, from the value of the frequency of the local wave delivered by the local oscillator considered.

6. The system according to the preceding claim, in which said measurement means (MES) is able to frequentially separate each pulse included within the output signal of the coupling means.

7. The system according to any of claims 5 or 6, in which each frequency shift is defined such that:

$$\Delta f_{i+1} \geq \Delta f_i + \Delta f_{spectrum},$$

where

- $\Delta f_i$ is the frequency shift carried out on the output signal of the mixer of rank i, and
- $\Delta f_{spectrum}$ is the width of the spectrum of the signals implemented by said system.

8. The system according to any of the preceding claims, being of instantaneous wideband type.

9. The system according to any of claims 1 to 7, being of restricted instantaneous band type.

10. The use of a system according to any of the preceding claims to perform goniometry.

FIG.1

FIG.2

FIG.3

FIG.4